(19) Europäisches Patentamt
European Patent Office
Office européen des brevets

(11) **EP 4 311 898 A1**

(12) **EUROPEAN PATENT APPLICATION**

(43) Date of publication:
**31.01.2024 Bulletin 2024/05**

(21) Application number: **23187966.9**

(22) Date of filing: **26.07.2023**

(51) International Patent Classification (IPC):
**E04H 4/16** (2006.01)

(52) Cooperative Patent Classification (CPC):
**E04H 4/1654; G05D 1/0259; G05D 1/027;**
G05D 2201/0203

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.07.2022 US 202263369653 P**
**27.07.2022 US 202263369655 P**
**22.09.2022 US 202263376755 P**

(71) Applicant: **Maytronics Ltd.**
**1935000 Kibbutz Yizrael (IL)**

(72) Inventors:
• **GOLDENBERG, Gilad**
**4434705 Kfar Saba (IL)**

• **GUY, Ron**
**1085000 Kibbutz Kfar-Ruppin (IL)**
• **YEHUDA, Idan**
**1935000 Kibbutz Yizrael (IL)**
• **DOTAN, Shir**
**1935000 Kibbutz Yizrael (IL)**
• **LIBERMAN, Yuval**
**1935000 Kibbutz Yizrael (IL)**
• **PINHASI, Noa**
**1935000 Kibbutz Yizrael (IL)**

(74) Representative: **Jaeger, Michael David**
**Withers & Rogers LLP**
**2 London Bridge**
**London SE1 9RA (GB)**

(54) **NAVIGATING A POOL RELATED PLATFORM**

(57) A method for navigating a movable pool related platform, PRP (10,200), the method includes moving the movable PRP along a home direction, wherein the movable PRP is associated with a gyroscope and with a magnetometer, wherein the moving is based on a gyroscope-based direction of movement estimate, wherein the gyroscope was aligned with the magnetometer. The magnetometer was calibrated during a calibration process that includes (i) determining, by a controller of the movable PRP, a mapping between magnetometer readings and a magnetometer-based direction of movement estimate; wherein the mapping is based, at least in part, on a first range of the first axis magnetometer readings and a second range of the second axis magnetometer readings; and (ii) performing an alignment iteration that comprises aligning, by the controller, between the magnetometer-based direction of movement estimate and the gyroscope-based direction of movement estimate.

FIG. 1

**Description**

CROSS REFERENCE

This application claims priority of each one of (a) US provisional patent 63/369,653 filing date July 27 2022, (b) US provisional patent 63/369,655 filing date July 27 2022, and (c) US provisional patent 63/376,755 filing date September 22 2022, all being incorporated herein in their entirety.

BACKGROUND

A pool cleaning robot (PCR) may navigate within a pool using a magnetometer that is factory calibrated. The calibration process is costly and inaccurate as the magnetic fields in the factory differ from the magnetic fields within a pool to be cleaned by the PCR.

The PCR should be extracted from a pool from time to time - for various purposes such as cleaning a filtering unit of the PCR, charging, and the like.

There is a growing need to direct the PCR towards an exit position - without using a factory calibrated magnetometer.

SUMMARY

There may be provided a movable pool related platform (PRP) and a method for navigating the movable PRP.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features, and advantages thereof, may best be understood by reference to the following detailed description when read with the accompanying drawings in which:

FIG. 1 illustrates two examples of a PCR;
FIG. 2 illustrates an example of a method;
FIG. 3 illustrates an example of a PCR and a detachable and floating skimmer;
FIG. 4 illustrates an example of a PCR and a detachable and floating skimmer;
FIG. 5 illustrates an example of a chlorine dispensing; and
FIG. 6 illustrates an example of a dispensing of chlorine by a PCR.

DESCRIPTION OF THE PREFERRED EMBODIMENTS

Any reference to a pool cleaner or pool cleaning robot, should be applied, mutatis mutandis to a method that is executed by a pool cleaner and/or to a non-transitory computer readable medium that stores instructions that once executed by the pool cleaner will cause the pool cleaner to execute the method.

Any reference to method should be applied, mutatis mutandis to a pool cleaning robot , that is configured to execute the method and/or to a non-transitory computer readable medium that stores instructions that once executed by the pool cleaner will cause the pool cleaner to execute the method.

Any reference to a non-transitory computer readable medium should be applied, mutatis mutandis to a method that is executed by a pool cleaning robot that is configured to execute the instructions stored in the non-transitory computer readable medium.

The term "and/or" is additionally or alternatively.

"Swimming pool" or "pool" mean any spa or tank or any reservoir containing liquid.

Because the apparatus implementing the present invention is, for the most part, composed of optical components, sensors and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

In the following specification, the invention will be described with reference to specific examples of embodiments of the invention. It will, however, be evident that various modifications and changes may be made therein without departing from the broader spirit and scope of the invention as set forth in the appended claims.

The word "may include" does not exclude the presence of other elements or steps then those listed in a claim. It is understood that the terms so used are interchangeable under appropriate circumstances such that the embodiments of the invention described herein are, for example, capable of operation in other orientations than those illustrated or otherwise described herein.

## PCR and a navigation of a PCR

A PCR is a non limiting example of a movable PRP. A movable PRP is any platform that is capable of moving within a pool and is capable of performing an operation related to a liquid of a pool - cleaning, changing chemical composition, monitoring, and the like. Examples of a PRP include a PCR, a pool robot that differs from a PCR, a movable floating unit, a movable skimmer, and the like. Any example related a PCR may be applied mutatis mutandis, to any other movable PRP.

The term "home direction" is a direction that once followed by the PCR leads the PCR to a potential exit point for exiting the pool. The exit point may be any point along a certain part of the pool - for example any point along a certain sidewall of the pool or any point along a portion of the sidewall of the pool - or even be located at a certain distance from any sidewalls of the pool.

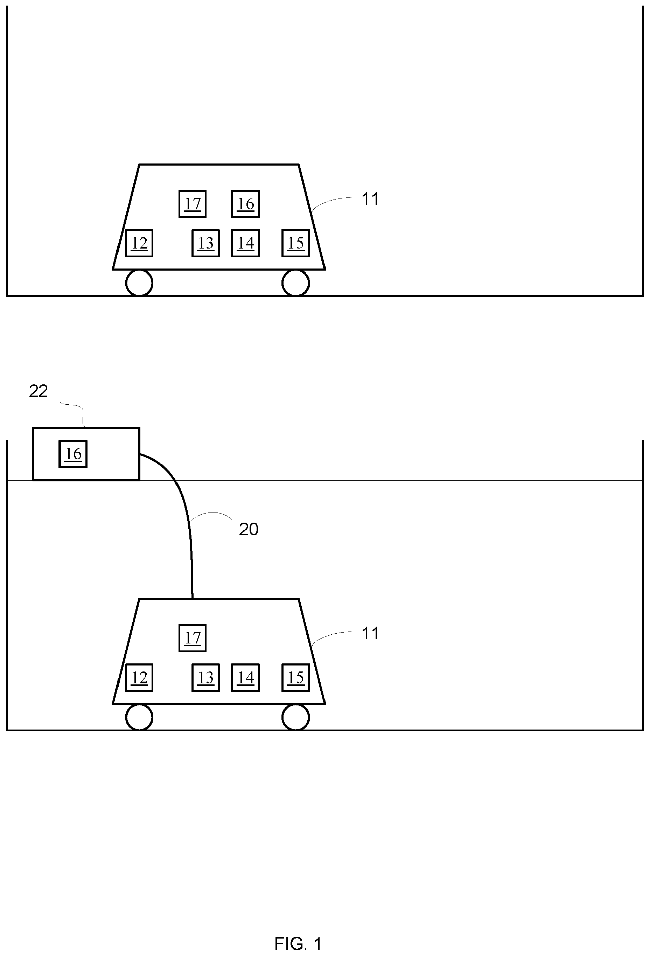

Figure 1 illustrates two examples of a PCR 10 within a pool. The PCR may be much smaller in relation to the pool - from what is illustrated in figure 1.

In the first example, PCR 10 include a housing 11, a filtering unit 12, fluid path elements (not shown) a propulsion unit 13, a communication unit 14, a controller 15, a magnetometer 16 and a gyroscope 17. The PCR 10 may include a power source and other components (not shown) such as an accelerometer. The accelerometer may be located anywhere in the PCR and may be sued for detecting and/or measuring slopes.

In the first example, PCR 10 include a housing 11, a filtering unit 12, fluid path elements (not shown) a propulsion unit 13, a communication unit 14, a controller 15 and a gyroscope 17. The PCR 10 may include a power source such as a cable interface 18. and other components (not shown). PCR 10 is connected by cable 20 to floating unit 22. Floating unit 22 includes magnetometer 16 and may include other components (not shown) such as a power source, a controller, a communication unit, and the like.

It should be noted that the gyroscope can be located in the floating unit.

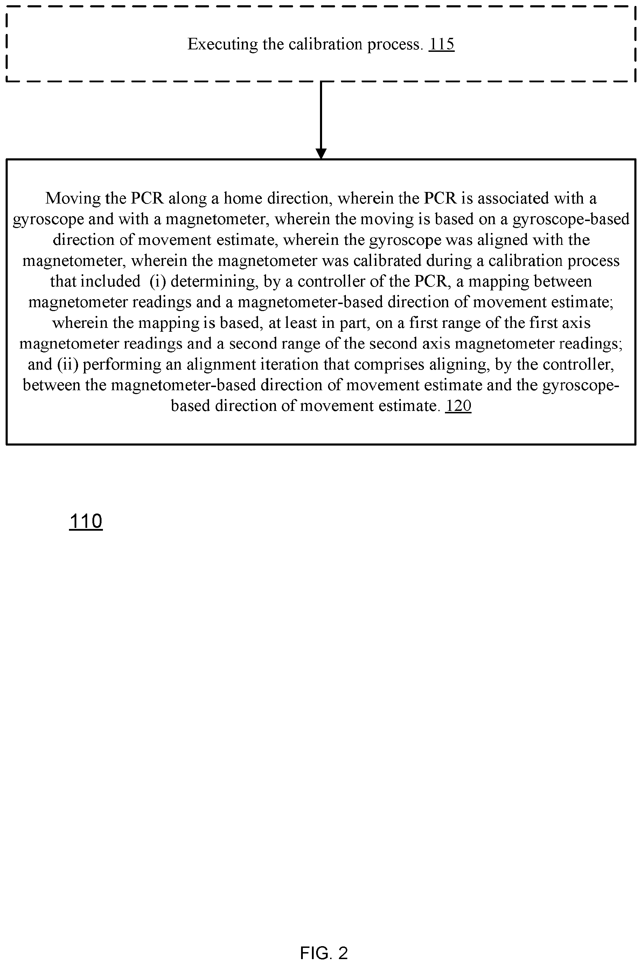

Figure 2 illustrates an example of method 110 for navigating a PCR.

According to an embodiment method 110 includes step 120 of moving the PCR along a home direction, wherein the PCR is associated with a gyroscope and with a magnetometer, wherein the moving is based on a gyroscope-based direction of movement estimate, wherein the gyroscope was aligned with the magnetometer, wherein the magnetometer was calibrated during a calibration process that included (i) determining, by a controller of the PCR, a mapping between magnetometer readings and a magnetometer-based direction of movement estimate; wherein the mapping is based, at least in part, on a first range of the first axis magnetometer readings and a second range of the second axis magnetometer readings; and (ii) performing an alignment iteration that comprises aligning, by the controller, between the magnetometer-based direction of movement estimate and the gyroscope-based direction of movement estimate.

The determining of the mapping may include:

a. Normalizing first axis magnetometer readings based on the first range to provide normalized first axis magnetometer readings. For example - mapping the first range of value to a normalized range - for example a normalized range that ranges between -1 to +1. The mapping of the first range may include calculating the difference between a maximal value of the first range and a minimal value of the first range.

b. Normalizing second axis magnetometer readings based on the second range to provide normalized second axis magnetometer readings.

c. Defining the mapping as an arctangent of a ratio between the normalized first axis magnetometer readings and the normalized second axis magnetometer readings.

According to an embodiment, the magnetometer is configured to provide readings along three axes - for example along a z-axis, an x-axis and a y-axis.

The alignment iteration may be executed one or multiple times. For example - it may be executed following each time period in which the gyroscope accuracy falls below a defined threshold - for example each 5 minutes in which the PCR moved without aligning with a sidewall of the pool.

According to an embodiment, step 120 may include executing one or more alignment iterations to compensate for gyroscope errors.

According to an embodiment, method 110 also includes step 105 (dashed box) of executing the calibration process.

Method 110 includes using magnetometer readings and gyroscope readings.

According to an embodiment the gyroscope is a part of the PCR. Alternatively - the gyroscope may belong to a floating unit that is connected (for example by cable) to the PCR.

According to an embodiment the magnetometer is a part of the PCR. Alternatively - the magnetometer may belong to a floating unit connected (for example by cable) to the PCR.

Using the floating unit has several benefits:

 a. The user may physically interact with the floating unit - for example by setting the floating unit to be directed at the home direction.
 b. The water of the pool are virtually flat - allowing to perform a two-dimensional calibration process - which is simpler than performing a three dimensional calibration process.

When the magnetometer is located in the floating unit and the gyroscope is located within the PCR and there is a need to align between the direction estimates based on the different sensors - the alignment may include evaluating whether both the PCR and the floating unit propagate at the same direction. As the floating unit is attached to the PCR via a cable that may be elastic - the propagation at the same direction may be deemed to occur after the PCR moves at the same direction for at least a minimal period of time - for example after moving at the same direction for at least 20 seconds, 30 seconds, and the like.

When the magnetometer is located in the floating unit, the calibration process may include sensing that the user positioned the floating unit in the home direction. The user may position the floating unit and notify the PCR - for example using a wireless communication link between the PCR and a mobile device of the user - that the floating unit was positioned at the home direction.

The positioning may be followed by obtaining the magnetometer readings at this moment. While the magnetometer readings are indicative of the home direction, the gyroscope readings are not linked to the home direction - as the PCR may not be aligned with the floating unit. Nevertheless - a controller of the PCR may store the magnetometer readings that reflect the home direction - and following an alignment between the magnetometer and the gyroscope - may use the pre-aligned gap between (i) a gyroscope-based direction of movement estimate, and (ii) a magnetometer-based direction of movement estimate - to calculate the gyroscope-based direction of movement estimate value that represents the home direction.

For example:

The gyroscope-based direction of movement estimate value that represents the home direction the = (magnetometer readings are indicative of the home direction) + the gap.

It has been found that the magnetometer readings may be a bit noisy - but their noise free measurements are the same over time, while the gyroscope accuracy reduces over time - and there is a need to perform an alignment iteration in a periodical manner

- unless the PCR reaches a sidewall of the pool and aligns with the sidewall in the pool
- especially when the pool has sidewalls that are normal to each other.

When the user is not able to physically set the direction of the magnetometer - for example when there is no floating unit and the magnetometer and the gyroscope are included in a PCR that is submerged - the calibration process may include initially determined in an arbitrary manner the home direction. The controller may determine that the PCR should move in an arbitrary direction till reaching a sidewall, and the user - using a wireless link to the PCR may inform the PCR that it reached the wrong sidewall.

If the pool is rectangular - or has sidewalls that are normal to each other - which can be sensed by comparing the can sensed each time the PCR is aligned with a sidewall - which can sensed by the PCR by reaching each one of the wall and comparing the gyroscope-based direction of movement estimate and/or the magnetometer-based direction of movement estimate - when reaching different sidewalls - the PCR knows how to reach a specific sidewall - and if the user indicates that another sidewall includes an exit point - the PCR can reach that wall given the known spatial relationship between the sidewalls.

According to an embodiment, the PCR may search for a positive slope (at least a segment of the bottom of the pool that is oriented at a positive angle) - that if followed will cause the PCR to reach more shallow water - which may be regarded as an exit point.

If there are two or more sloped portions of the pool - the PCR may distinguish between the sloped portions by using the readings of the magnetometer.

According to an embodiment, the PCR, following a scan of the bottom of the pool, is configured to select on which positively sloped portion of the bottom of the pool to climb - in order to reach the exit point.

According to an embodiment, a calibration of the magnetometer includes:

a. User points float to home direction.
b. Save magnetometer readings when the magnetometer is located at the home direction.
c. Determine, based on the magnetometer readings, a magnetometer-based direction of movement estimate.

According to an embodiment, an alignment between the gyroscope and magnetometer includes:

a. Initiation request - first user activation.
b. Reading magnetometer readings to perform a two-dimensional calibration while the PCR moves to multiple directions. The movement may follow a pattern that include multiple repetitions of (i) of moving the PCR back and forth along a direction (and an opposite direction), (ii) changing the direction and jumping to step (i). In an example the movement lasted for twenty seconds per direction and the direction was changed by ninety degrees. The movement may be longer or shorter than twenty seconds and/or the angular change may differ from ninety degrees. Steps (i) and (ii) may be repeated until an angular coverage of at least 360 degrees (of 360 degrees × 2 or 3 or more) is obtained.
c. Aligning the magnetometer-based direction of movement estimate with the gyroscope-based direction of movement estimate

An alignment between the gyroscope (of a PCR) and a magnetometer (of a floating unit) may include:

a. PCR waits for a constant drive along a same direction of at least a certain number (for example 10, 12, 15, 20) seconds.
b. PCR computes the confidence level of the synchronization in accordance with how much time robot drove at the same direction. The highest confidence level may be provide when the time is within a desired range - which may be limited by a minimal time and may even be limited by a maximal time.
c. The PCR updates the value of the gyroscope -based direction of movement estimate based on the confidence level - higher confidence level results in a more significant amendment/ alignment.

## Pool cleaning with a floating net

There is provided a detachable and floating skimmer.
The detachable and floating skimmer has a floating net and a debris flow control unit that prevents the debris to escape the floating net. The debris flow control unit may include multiple rotatable fins that are moved from an open position (allows the debris to enter the floating net) to a closed position (prevents the debris to exit the floating net). The rotatable fins may be at a closed position when the floating net is substantially horizontal, when the pool cleaning robot stops moving, and the like.
When moving, the rotatable fins may be at an open position. Other unidirectional debris control elements may be provided.

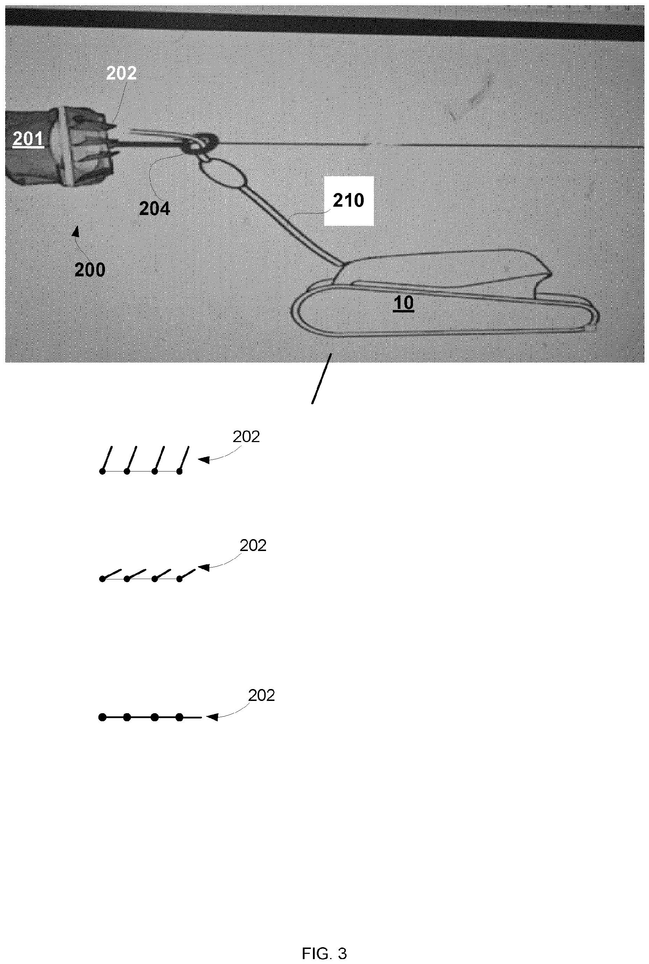

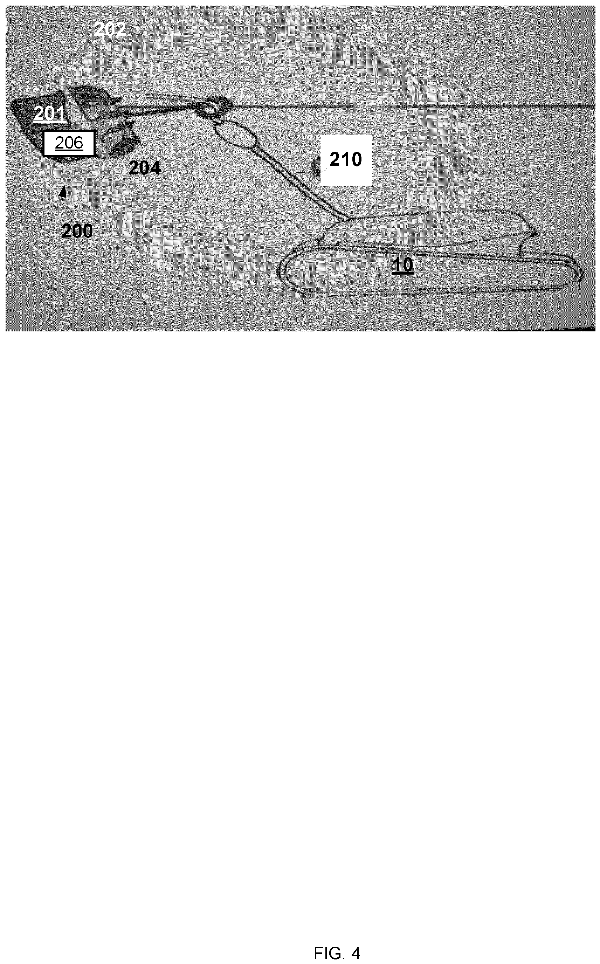

Figure 3 and 4 illustrates the detachable and floating skimmer 200, a PCR 10, cable 210 connected to the PCR and the detachable and floating skimmer, floating net 201 and a debris flow control such as multiple rotating fins 202. Figure 3 illustrates the rotation of the multiple rotating fins 202 - the rotation may be obtained using one or more rotating motors and/o transmission elements.
The floating net has an opening and the debris flow control unit controls (for example may be connected to) the opening.
The detachable and floating skimmer is detachably connected to the pool cleaning robot (via a mechanical interface) - or to a cable connected to the pool cleaning robot. For example- the mechanical interface 204 may include a loop or apertured part that may surround the cable- and be removed from the cable when necessary (for example when the floating net is full or partially full).
The pool cleaning robot may include a controller and other components (for example propulsion unit for moving the pool cleaning robot, filtering unit, one or more brush wheels, sensors, camera, power supply, impeller, pump motor, housing within one or more fluid openings, and the like). An example of a pool cleaning robot with at least some of these components is illustrated in US patent application publication 2018/0266131 which is incorporated herein by reference.
It should be noted that the detachable and floating skimmer may include a fluid circulation element (such as a pump - denoted 206 in figure 4) that may induce fluid with debris to enter the floating net - regardless of the movement (or lack of movement) of the pool cleaning robot.
The detachable and floating skimmer may have size and/or fluid circulation capabilities that are set according to the size of the pool and/or other factors.

**PCR with chlorine dispensing capabilities.**

There is provided a pool cleaning robot that has chlorine dispensing capabilities.

The pool cleaning robot may control the dispensing of the chlorine (when to dispense, and/or displacement rate, and the like) - or may release the chlorine in an uncontrolled manner.

The pool cleaning robot may include an analyzer for analyzing the content of the fluid of the pool - for example monitor pH of the fluid - and a controller may control the dispensing of chlorine based on the pH of the fluid.

The dispensing may be based on one or more parameters - for example the amount of remaining chlorine, time left till the end of the cleaning session, and the like. The dispensing may be aimed at setting the pH to a desired value determined by the user - or determined in any other manner.

The control of the dispensing may be executed in any manner - for example opening, closing or partially closing a fluid path between the chlorine table and the fluid of the water. This can be done by a valve shutter configurable opening and the like.

The pool cleaning robot may include an analyses and other components (for example propulsion unit for moving the pool cleaning robot, filtering unit, one or more brush wheels, sensors, analyzer, camera, power supply, impeller, pump motor, housing within one or more fluid openings, and the like). An example of a pool cleaning robot with an analyzer is illustrated in US patent application publication 2018/0266131 which is incorporated herein by reference.

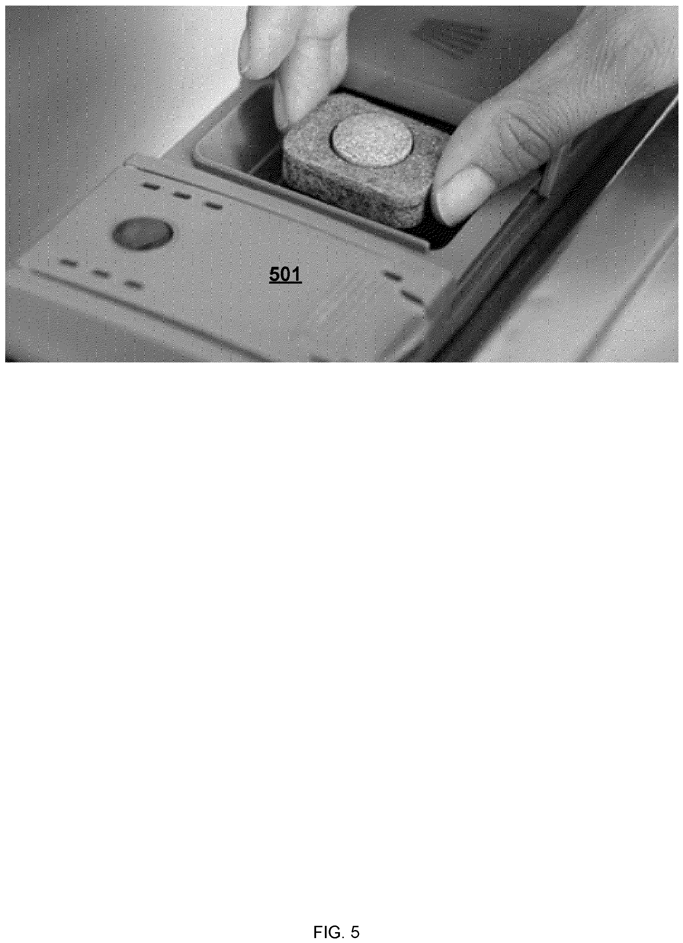

Figure 5 illustrates an example of a chlorine dispensing cell 501 in which a chlorine table is inserted. The chlorine dispensing cell is a part of a chlorine disposing unit that may also include a controller. In figure 1 the chlorine dispensing cell has a detachable opening.

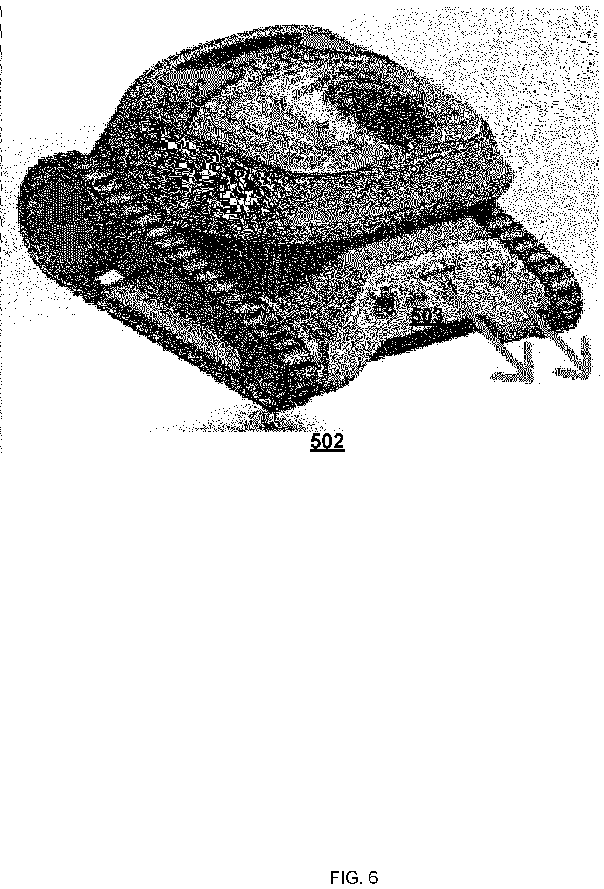

Figure 6 illustrates an example of dispensing (see arrows) of chlorine by pool cleaning robot 502 that includes a chlorine dispensing unit 503.

**Smart navigation**

According to an embodiment the PCR may determine when and how to move within the pool - during cleaning or between cleaning - in an effective manner. The following examples illustrate schemes and/or parameters for determining movement and/or cleaning parameters to be applied by the PCR. The determining is executed by a controller and/or processor of the PCR.

According to an embodiment, the PCR is configured to perform at least one of:

a. Based on pool size and battery status, offer the cycle duration and climbing frequency.

b. Based on pool and environment conditions and solar charging capability, recommended the optimal personalized operation weekly scheduling cycles.

c. Based on pool specification and battery status - determine movement and/or cleaning parameters.

d. Optimize energy usage while cleaning and/or moving in the pool.

e. Optimize the duration and climbing ratio (amount of climbing) based on pool size and depth, battery status and cleanliness of the filter unit of the PCR.

f. Determine cleaning based on at least one of water temperature, solar panel charge capability (of the PCR) and pool clean condition - for example determine cleaning cycles - duration and/or frequency.

g. Determine cleaning based on pool environment condition - for example determine cleaning cycles - duration and/or frequency.

h. Determine movement and/or cleaning parameters based on ambient temperature and/r season of the year.

TABLE 1 is an example of a different scenarios and/or movement and/or cleaning parameters determined in these different scenarios. The values in the table are merely examples and each value may be substantially changed.

TABLE 1

|  | What to do | Frequency |
|---|---|---|
| Pool size | Small(up to 24 m^2) - 60 min cycle<br>Med(24-32 m^2) - 75 min<br>Large(32-48 m^2) - 90 min<br>Large pools - 50% climbs less | After the user insert the pool size |

(continued)

|  | What to do | Frequency |
|---|---|---|
| Battery low | • While robot power on & battery low (SoC<60%) scanning with 50% climbs<br>• While robot power on & battery low (SoC<40%) scanning floor only and 15% less of suction power | Always |
| Pool Shape | Line-by-Line for rectangular and while battery is low<br>Star for round<br>Spot cleaning | After the user insert the pool size |
| FI levels | Low - regular scan<br>High - 50% climbs less, waterline for 20 sec instead of 40 sec | |
| Pool depth | Pool depth less than 2 meters - Regular scan<br>Pool depth more than 2 meters - 50% climbs | Always |

TABLE 2 is an example of a different scenarios and/or movement and/or cleaning parameters determined in these different scenarios. The values in the table are merely examples and each value may be substantially changed.

TABLE 2

| Based on | Do |
|---|---|
| Temperature sensing | Low temp, assume low season - downgrade weekly level<br>High temp, assume high season - upgrade weekly level |
| Solar panel | Base on the solar panel charge capability - upgrade weekly level |
| Avg filter indicator | Low - assume clean pool, downgrade weekly level<br>High - assume not clean pool, upgrade weekly level |

Assuming that the robot has more than 20 minutes (or any other defined threshold) to scan the pool in order to complete a cleaning session - than the PCR can start scanning from any cleaning session. If no - TABLE 3 provides some scenarios:

TABLE 3

|  | Push notification is off | Push notification is on |
|---|---|---|
| Operation from the App | Send a push notification to recommend charging for full pool cleaning | The robot starts scanning until battery low |
| Operation from the Buoy | Not relevant | The robot starts scanning until battery low |
| Auto operation | Send a push notification to recommend charging for full pool cleaning | The robot starts scanning until battery low |

According to an embodiment, a PCR may be inserted to the pool, drive in the pool and figure out what is the amount of slopes and in which angles are they. The PCR may also be configured to evaluate the pool size and how slippery is the pool.

Considering the amount of slopes, angles, slippery and shapes (which the PCR can recognize if it's a square pool), the PCR is configured to decide the best scanning method to clean the pool and the amount of time needs to clean it. For example - line by line (LBL) scan for rectangular pools with minor slopes.

While in the pool, and sensing the status of a filtering unit of the PCR, the PCR is configured to suggest to the user to activate the PCR in a specific manner - for example the frequency of cleaning may be determined based on the status of the filtering unit - especially the rate in which the filtering unit gets clogged. For example - assuming an initial default of cleaning twice a week, recognizing by the PCR that the filtering unit is clogged after a fraction of the cleaning cycle (for example after 20 minutes) - the frequency of the cleaning cycles may be increased to 3 times or 4 times a week).

The PCR may detect that the pool floor is very dirty (because of filtering unit clogging levels rising fast) - and may perform one or more cycles of cleaning that do not involve cleaning sidewalls. The PCR may request the suer to dd one or more additional cleaning cycles for cleaning (at least) the sidewalls.

The PCR can allocate more cleaning efforts to more dirty regions of the pool.

Any reference to the terms "including", "comprising", "having", may be applied mutatis mutandis to any one of "consisting" and "consisting essentially of".

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

In the foregoing specification, the invention has been described with reference to specific examples of embodiments of the invention. It will, however, be evident that various modifications and changes may be made therein without departing from the broader spirit and scope of the invention as set forth in the appended claims.

Moreover, the terms "front", "back", "top", "bottom", "over", "under" and "the like" in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Those skilled in the art will recognize that the boundaries between logic blocks are merely illustrative and that alternative embodiments may merge logic blocks or circuit elements or impose an alternate decomposition of functionality upon various logic blocks or circuit elements. Thus, it is to be understood that the architectures depicted herein are merely exemplary, and that in fact many other architectures can be implemented which achieve the same functionality.

Any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected," or "operably coupled," to each other to achieve the desired functionality.

Furthermore, those skilled in the art will recognize that boundaries between the above described operations are merely illustrative. The multiple operations may be combined into a single operation, a single operation may be distributed in additional operations and operations may be executed at least partially overlapping in time. Moreover, alternative embodiments may include multiple instances of a particular operation, and the order of operations may be altered in various other embodiments.

Also for example, in one embodiment, the illustrated examples may be implemented as circuitry located on a single integrated circuit or within a same device. Alternatively, the examples may be implemented as any number of separate integrated circuits or separate devices interconnected with each other in a suitable manner.

Also for example, the examples, or portions thereof, may implemented as soft or code representations of physical circuitry or of logical representations convertible into physical circuitry, such as in a hardware description language of any appropriate type.

Also, the invention is not limited to physical devices or units implemented in non-programmable hardware but can also be applied in programmable devices or units able to perform the desired device functions by operating in accordance with suitable program code, such as mainframes, minicomputers, servers, workstations, personal computers, notepads, personal digital assistants, electronic games, automotive and other embedded systems, cell phones and various other wireless devices, commonly denoted in this application as 'computer systems'.

However, other modifications, variations and alternatives are also possible. The specifications and drawings are, accordingly, to be regarded in an illustrative rather than in a restrictive sense.

In the claims, any reference signs placed between parentheses shall not be construed as limiting the claim. The word 'comprising' does not exclude the presence of other elements or steps then those listed in a claim. Furthermore, the terms "a" or "an," as used herein, are defined as one as or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an". The same holds true for the use of definite articles. Unless stated otherwise, terms such as "first" and "second" are used to arbitrarily distinguish between the elements such terms describe. Thus, these terms are not necessarily intended to indicate temporal or other prioritization of such elements the mere fact that certain measures are recited in mutually different claims does not indicate that a combination of these measures cannot be used to advantage.

Any system, apparatus or device referred to this patent application includes at least one hardware component.

While certain features of the invention have been illustrated and described herein, many modifications, substitutions, changes, and equivalents will now occur to those of ordinary skill in the art. It is, therefore, to be understood that the appended claims are intended to cover all such modifications and changes as fall within the true spirit of the invention.

Any combination of any component of any component and/or unit of pool cleaning robot that is illustrated in any of the figures and/or specification and/or the claims may be provided. For example - the detachable and floating skimmer may be attached to any PCR illustrated in the application - for example to a PCR that includes a chlorine dispensing unit and/or to a PCR configured to execute method 110. Yet for another example - a PCR that includes a chlorine dispensing unit may be configured to execute method 110 and/or may be attached to a detachable and floating skimmer.

Any combination of any pool cleaning robot illustrated in any of the figures and/or specification and/or the claims may be provided.

Any combination of any set of pool cleaning robots illustrated in any of the figures and/or specification and/or the claims may be provided.

Any combination of steps, operations and/or methods illustrated in any of the figures and/or specification and/or the claims may be provided.

Any combination of operations illustrated in any of the figures and/or specification and/or the claims may be provided.

**Claims**

1. A method for navigating a movable pool related platform, PRP, the method comprising:
   moving the movable PRP along a home direction, wherein the movable PRP is associated with a gyroscope and with a magnetometer, wherein the moving is based on a gyroscope-based direction of movement estimate, wherein the gyroscope was aligned with the magnetometer, wherein the magnetometer was calibrated during a calibration process that comprised:

   determining, by a controller of the movable PRP, a mapping between magnetometer readings and a magnetometer-based direction of movement estimate; wherein the mapping is based, at least in part, on a first range of the first axis magnetometer readings and a second range of the second axis magnetometer readings; and
   performing an alignment iteration that comprises aligning, by the controller, between the magnetometer-based direction of movement estimate and the gyroscope-based direction of movement estimate.

2. The method according to claim 1, comprising executing the calibration process.

3. The method according to claim 1 or 2, wherein the magnetometer is located at a floating unit that is attached to the pool cleaning process.

4. The method according to claim 1, 2 or 3, comprising executing the alignment iteration following an evaluation that the movable PRP and the floating unit propagate in a same direction.

5. The method according to any one of the preceding claims, comprising sensing that a user positioned the floating unit at the home direction.

6. The method according to any one of the preceding claims, comprising determining a value of the gyroscope-based direction of movement estimate that represents the pool exit direction.

7. The method according to any one of the preceding claims, wherein the magnetometer is located at the PCR.

8. The method according to any one of the preceding claims, wherein the gyroscope is located at the PCR.

9. The method according to any one of the preceding claims, wherein the home direction is initially determined in an arbitrary manner.

10. The method according to any one of the preceding claims, wherein the calibration process comprises searching, based on gyroscope readings, a positive slope that is directed towards the home direction.

11. The method according to claim 10, wherein the searching comprises finding positive slopes and differentiating between the positive slopes based on magnetometer readings when the movable PRP moves along the positive slopes.

12. The method according to any one of the preceding claims, comprising performing the alignment iteration when reaching a sidewall of the pool.

13. The method according to any one of the preceding claims, wherein the determining of the mapping comprises:

normalizing first axis magnetometer readings based on the first range to provide normalized first axis magnetometer readings;
normalizing second axis magnetometer readings based on the second range to provide normalized second axis magnetometer readings; and
defining the mapping as an arctangent of a ratio between the normalized first axis magnetometer readings and the normalized second axis magnetometer readings.

14. A non-transitory computer readable medium for navigating a movable pool related platform, PRP, the non-transitory computer readable medium stores instruction that once executed by the movable PRP cause the movable PRP to:

move the movable PRP along a home direction, wherein the movable PRP is associated with a gyroscope and with a magnetometer, wherein the moving is based on a gyroscope-based direction of movement estimate, wherein the gyroscope was aligned with the magnetometer, wherein the magnetometer was calibrated during a calibration process that comprised:

determining, by a controller of the movable PRP, a mapping between magnetometer readings and a magnetometer-based direction of movement estimate; wherein the mapping is based, at least in part, on a first range of the first axis magnetometer readings and a second range of the second axis magnetometer readings; and
performing an alignment iteration that comprises aligning, by the controller, between the magnetometer-based direction of movement estimate and the gyroscope-based direction of movement estimate.

15. A movable pool related platform, PRP, comprising:

a gyroscope;
a magnetometer;
a controller;
a propulsion unit configured to moving the movable PRP along a home direction, wherein the moving is executed under a control of the controller and based on a gyroscope-based direction of movement estimate, wherein the gyroscope was aligned with the magnetometer, wherein the magnetometer was calibrated during a calibration process that comprised:

determining, by a controller of the movable PRP, a mapping between magnetometer readings and a magnetometer-based direction of movement estimate; wherein the mapping is based, at least in part, on a first range of the first axis magnetometer readings and a second range of the second axis magnetometer readings; and
performing an alignment iteration that comprises aligning, by the controller, between the magnetometer-based direction of movement estimate and the gyroscope-based direction of movement estimate.

FIG. 1

Executing the calibration process. 115

Moving the PCR along a home direction, wherein the PCR is associated with a gyroscope and with a magnetometer, wherein the moving is based on a gyroscope-based direction of movement estimate, wherein the gyroscope was aligned with the magnetometer, wherein the magnetometer was calibrated during a calibration process that included (i) determining, by a controller of the PCR, a mapping between magnetometer readings and a magnetometer-based direction of movement estimate; wherein the mapping is based, at least in part, on a first range of the first axis magnetometer readings and a second range of the second axis magnetometer readings; and (ii) performing an alignment iteration that comprises aligning, by the controller, between the magnetometer-based direction of movement estimate and the gyroscope-based direction of movement estimate. 120

110

FIG. 2

FIG. 3

FIG. 4

501

FIG. 5

503

502

FIG. 6

Europäisches
Patentamt

European
Patent Office

Office européen
des brevets

# EUROPEAN SEARCH REPORT

Application Number

EP 23 18 7966

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 293 324 A1 (MAYTRONICS LTD [IL]) 14 March 2018 (2018-03-14) | 14,15 | INV. E04H4/16 |
| A | * column 48, lines 35-37, paragraphs 0220,0242; figures 2A,2B,22 * | 1-13 | |
| X | WO 2017/216784 A1 (AQUATRON ROBOTIC TECH LTD [IL]) 21 December 2017 (2017-12-21) | 14,15 | |
| A | * paragraphs [0047], [0057] - [0060]; figures 1A,1B,5 * | 1-13 | |
| A | EP 2 677 275 A2 (INNOVATIVE SOLUTIONS & SUPPORT [US]) 25 December 2013 (2013-12-25) * paragraph [0021]; figure 3 * | 1-15 | |

TECHNICAL FIELDS SEARCHED (IPC)

E04H
G05D

The present search report has been drawn up for all claims

| Place of search | Date of completion of the search | Examiner |
|---|---|---|
| Munich | 15 December 2023 | Rosborough, John |

## ANNEX TO THE EUROPEAN SEARCH REPORT
## ON EUROPEAN PATENT APPLICATION NO.

EP 23 18 7966

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2023

| Patent document cited in search report | | Publication date | Patent family member(s) | | Publication date |
|---|---|---|---|---|---|
| EP 3293324 | A1 | 14-03-2018 | CY | 1125001 T1 | 05-01-2023 |
| | | | EP | 3293324 A1 | 14-03-2018 |
| | | | EP | 3293325 A1 | 14-03-2018 |
| | | | EP | 3293326 A1 | 14-03-2018 |
| | | | EP | 3604712 A1 | 05-02-2020 |
| | | | EP | 3926126 A2 | 22-12-2021 |
| | | | ES | 2890026 T3 | 17-01-2022 |
| | | | ES | 2897978 T3 | 03-03-2022 |
| | | | ES | 2906710 T3 | 20-04-2022 |
| | | | HR | P20220218 T1 | 29-04-2022 |
| | | | LT | 3604712 T | 10-02-2022 |
| | | | SI | 3604712 T1 | 29-04-2022 |
| | | | US | 2018071908 A1 | 15-03-2018 |
| | | | US | 2018073265 A1 | 15-03-2018 |
| | | | US | 2018073266 A1 | 15-03-2018 |
| | | | US | 2020149304 A1 | 14-05-2020 |
| | | | US | 2021324650 A1 | 21-10-2021 |
| WO 2017216784 | A1 | 21-12-2017 | US | 2019243379 A1 | 08-08-2019 |
| | | | WO | 2017216784 A1 | 21-12-2017 |
| EP 2677275 | A2 | 25-12-2013 | EP | 2677275 A2 | 25-12-2013 |
| | | | JP | 6653515 B2 | 26-02-2020 |
| | | | JP | 6831868 B2 | 17-02-2021 |
| | | | JP | 6831895 B2 | 17-02-2021 |
| | | | JP | 2014006248 A | 16-01-2014 |
| | | | JP | 2017181515 A | 05-10-2017 |
| | | | JP | 2019135490 A | 15-08-2019 |
| | | | JP | 2020076781 A | 21-05-2020 |
| | | | KR | 20130143498 A | 31-12-2013 |
| | | | US | 2013345972 A1 | 26-12-2013 |
| | | | US | 2016054126 A1 | 25-02-2016 |
| | | | US | 2017219346 A1 | 03-08-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63369653
- US 63369655
- US 63376755
- US 20180266131